(19) Europäisches Patentamt
European Patent Office
Office européen des brevets

(11)  **EP 4 017 026 B1**

(12)  **EUROPEAN PATENT SPECIFICATION**

(45) Date of publication and mention
of the grant of the patent:
**27.05.2026  Bulletin 2026/22**

(21) Application number: **21865348.3**

(22) Date of filing: **16.09.2021**

(51) International Patent Classification (IPC):
**H04R 1/40** $^{(2006.01)}$      **H04R 3/00** $^{(2006.01)}$
**G10L 25/51** $^{(2013.01)}$

(52) Cooperative Patent Classification (CPC):
**H04R 3/005; G10L 25/51; H04R 1/406;**
H04R 2430/03; H04R 2430/23

(86) International application number:
**PCT/JP2021/034092**

(87) International publication number:
**WO 2022/075035 (14.04.2022 Gazette 2022/15)**

(54) **SOUND SOURCE LOCALIZATION DEVICE, SOUND SOURCE LOCALIZATION METHOD, AND PROGRAM**

VORRICHTUNG ZUR ORTUNG VON SCHALLQUELLEN, VERFAHREN ZUR ORTUNG VON SCHALLQUELLEN UND PROGRAMM

DISPOSITIF DE LOCALISATION DE SOURCE SONORE, PROCÉDÉ DE LOCALISATION DE SOURCE SONORE ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.10.2020  JP 2020168766**

(43) Date of publication of application:
**22.06.2022  Bulletin 2022/25**

(73) Proprietor: **Audio-Technica Corporation
Machida-shi, Tokyo 194-8666 (JP)**

(72) Inventor: **KANEMARU, Shinken
Tokyo, 1948666 (JP)**

(74) Representative: **Plougmann Vingtoft a/s
Strandvejen 70
2900 Hellerup (DK)**

(56) References cited:
**JP-A- 2012 234 150      JP-A- H06 195 097**

- **DAISUKE TSUJI AND KENJI SUYAMA: "Moving sound source localization based on sequential subspace estimation in actual room environments", ELECTRONICS AND COMMUNICATIONS IN JAPAN, SCRIPTA TECHNICA. NEW YORK, US, vol. 94, no. 7, 1 July 2011 (2011-07-01), pages 17 - 26, XP001564935, DOI: 10.1002/ECJ.10333**
- **GE FENG-XIANG ET AL: "Target detecton and tracking via structured convex optimization", 2017 IEEE INTERNATIONAL CONFERENCE ON ACOUSTICS, SPEECH AND SIGNAL PROCESSING (ICASSP), IEEE, 5 March 2017 (2017-03-05), pages 426 - 430, XP033258453, DOI: 10.1109/ICASSP.2017.7952191**
- **DU BOYANG ET AL: "Nesterov Acceleration Gradient Algorithm For Adaptive Generalized Principal Component Extraction", 2019 4TH INTERNATIONAL CONFERENCE ON ELECTROMECHANICAL CONTROL TECHNOLOGY AND TRANSPORTATION (ICECTT), IEEE, 26 April 2019 (2019-04-26), pages 109 - 112, XP033572410, DOI: 10.1109/ ICECTT.2019.00032**

**Description**

TECHNICAL FIELD

The present disclosure relates to a sound source localization apparatus, a sound source localization method, and a program for identifying a position of a sound source.

BACKGROUND ART

Conventionally, a method for identifying a direction of a sound source has been studied. Patent Document 1 discloses a method for estimating a position of a sound source by estimating various parameters to minimize an objective function representing a difference between a posterior distribution of a source direction and a variational function on the basis of a variational inference method.

PRIOR ART

PATENT DOCUMENT

Patent Document: Japanese Patent No. 6623185

Further prior art is found in the publication 'Moving sound source localization based on sequential subspace estimation in actual room environments' by Daisuke Tsuji and Kenji Suyama (ELECTRONICS AND COMMUNICATIONS IN JAPAN, SCRIPTA TECHNICA. NEW YORK, US, vol. 94, no. 7, 1 July 2011, pages 17-26, which shows microphone array processing with sound source localisation using Projection Approximation Subspace Tracking for sequential estimation of the eigenvectors spanning the subspace, for which an eigen-decomposition is not required, thereby reducing complexity. A target sound source is found by minimising the square sum of the inner product of the signal subspace and noise subspace vectors.

SUMMARY OF INVENTION

PROBLEMS TO BE SOLVED BY THE INVENTION

When the variational inference method is used as in the conventional method, an estimation value and a variable for obtaining the estimation value are probability variables, and so a plurality of unknown parameters exist. Since a large amount of calculation is required to estimate the plurality of variables, the conventional method using the variable inference is not suitable for real-time localization of a sound source in a meeting.

The present disclosure focuses on this point, and an object of the present disclosure is to shorten a time required for localizing a sound source.

MEANS FOR SOLVING THE PROBLEMS

A first aspect of the present disclosure provides a sound source localization apparatus that includes a sound signal vector generation part that generates a sound signal vector based on a plurality of electrical signals outputted from a plurality of microphones that receive a sound generated by a sound source, a subspace identification part that identifies a signal subspace corresponding to a signal component included in the sound signal vector and a noise subspace corresponding to a noise component included in the sound signal vector, a candidate identification part that identifies one or more candidate vectors indicating a plurality of candidates of a direction of the sound source by applying the Delay-Sum Array method to the sound signal vector, and a direction identification part that identifies, as the direction of the sound source, a direction indicated by a sound source direction vector searched using an initial solution based on at least one of the one or more candidate vectors, on the basis of an optimization objective function including a sum of squares of an inner product of the signal subspace and the noise subspace.

According to the invention, the candidate identification part identifies the initial solution for which a sum of squares of an inner product with the signal subspace vector corresponding to the signal subspace satisfies a predetermined reliability condition, among the one or more candidate vectors identified by applying the Delay-Sum Array method to the sound signal vector.

The candidate identification part may perform a process of identifying the one or more candidate vectors in parallel with a process of identifying the signal subspace and the noise subspace by the subspace identification part.

The sound signal vector generation part may generate the sound signal vector by performing the Fourier transformation on the plurality of electrical signals, and the direction identification part may identify the direction of the sound source for each frame of the Fourier transformation.

The direction identification part may identify the direction of the sound source on the basis of an average direction vector obtained by averaging a plurality of the sound source direction vectors corresponding to a plurality of frequency bins generated by the Fourier transformation.

The candidate identification part may identify the one or more candidate vectors by thinning out the frequency bins such that calculation of the one or more candidate vectors can be finished within one frame of the Fourier transform that is applied to the plurality of electrical signals.

The direction identification part may identify the sound source direction vector by using a stochastic gradient descent using the optimization objective function expressed by the following equation:

$$J_k(\theta, \phi) = \boldsymbol{a}_k^H(\theta, \phi)\boldsymbol{Q}_N(t, k)\boldsymbol{Q}_N^H(t, k)\boldsymbol{a}_k(\theta, \phi)$$

where $(\theta, \varphi)$ is a direction, $a_k(\theta_L, \varphi_L)$ is a virtual steering vector when it is assumed that there is a target sound source in $\theta$ and $\varphi$ directions, t is a frame number, k is a frequency bin number, and $Q_N(t, k)$ is a noise subspace vector.

The subspace identification part may identify the signal subspace on the basis of an orthogonality objective function based on a difference between the sound signal vector and a vector obtained by projecting the sound signal vector onto the signal subspace.

The subspace identification part may identify the signal subspace on the basis of the orthogonality objective function expressed by the following equation:

$$J\big(\boldsymbol{Q}_S(t, k)\big) = \sum_{l=1}^{t} \beta^{t-l}\|\boldsymbol{X}(l, k) - \boldsymbol{Q}_S(t, k)\boldsymbol{Q}_{PS}^H(l - 1, k)\boldsymbol{X}(l, k)\|^2$$

where $\beta$ is a forgetting function, t is a frame number, k is a frequency bin number, $Q_S(t,k)$ is a signal subspace vector, $Q_{PS}^H$ (l-1,k) is an estimation result of the signal subspace vector in a previous frame, and X is a sound signal.

A second aspect of the present disclosure provides a sound source localization method comprising the steps, executed by a computer, as defined in claim 9.

A third aspect of the present disclosure provides a program for causing a computer to execute the steps as defined in claim 10.

EFFECT OF THE INVENTION

According to the present disclosure, it is possible to shorten a time required for localizing a sound source.

BRIEF DESCRIPTION OF THE DRAWINGS

FIG 1 is a diagram for illustrating an overview of a microphone system.
FIG 2 shows a design model of a microphone array.
FIG 3 shows a configuration of a sound source localization apparatus.
FIG 4 is a flowchart of a process of the sound source localization apparatus executing a sound source localization method.
FIG 5 is a flowchart of a process of a direction identification part that identifies a direction of a sound source.

DETAILED DESCRIPTION OF THE INVENTION

[Outline of microphone system S]

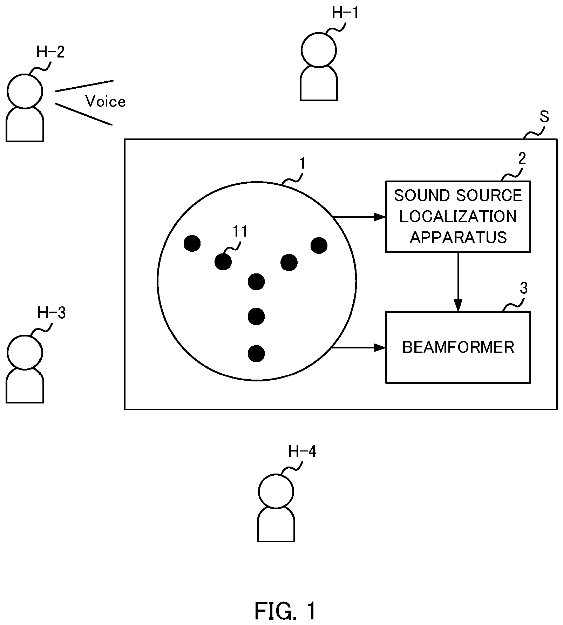

FIG 1 is a diagram for illustrating an overview of a microphone system S. The microphone system S includes a microphone array 1, a sound source localization apparatus 2, and a beamformer 3. The microphone system S is a system for collecting voices generated by a plurality of speakers H (speakers H-1 to H-4 in FIG 1) in a space such as a meeting room or hall.

The microphone array 1 has a plurality of microphones 11 represented by black circles in FIG 1, and they are installed on a ceiling, a wall surface, or a floor surface of a space where the speakers H stay. The microphone array 1 inputs a plurality of sound signals (for example, electrical signals) based on voices inputted to the plurality of microphones 11, to the sound source localization apparatus 2.

The sound source localization apparatus 2 analyzes the sound signals inputted from the microphone array 1 to identify the direction of the sound source (that is, the speaker H) that generated the voice. As will be described in detail later, the direction of the sound source is represented by a direction around the microphone array 1. The sound source localization apparatus 2 includes a processor, for example, and the processor executes a program to identify the direction of the sound source.

The beamformer 3 performs a beamforming process by adjusting weighting factors of the plurality of sound signals corresponding to the plurality of microphones 11 on the basis of the direction of the sound source identified by the sound source localization apparatus 2. The beamformer 3 makes the sensitivity to the voice generated by the speaker H larger than the sensitivity to a sound coming from a direction other than the direction where the speaker H is present, for example. The sound source localization apparatus 2 and the beamformer 3 may be realized by the same processor.

FIG 1 shows a state where a speaker H-2 is generating a voice. In the state shown in FIG 1, the sound source localization apparatus 2 identifies that the voice is generated from the direction of the speaker H-2, and the beamformer 3 performs the beamforming process such that a main lobe of directional characteristics of the microphone array 1 is oriented toward the speaker H-2.

When the microphone system S is used for separating voice by speaker or recognizing speech in a conference, the sound source localization apparatus 2 needs to identify the direction of the speaker during the speech in a short time as the speaker changes to another or moves. Therefore, it is desirable for the sound source localization apparatus 2 to finish the sound source localization process within one frame of the Fourier transformation that is applied to the sound signal, in order to ensure real-time performance. In addition, in order to separate voices of a large number of speakers without errors, the sound source localization apparatus 2 is required to identify the direction of the sound source with high accuracy.

MUltiple SIgnal Classification (MUSIC), which is one of sound source localization methods, is a high-resolution localization method based on the orthogonality of a signal subspace and a noise subspace. This method requires eigenvalue decomposition, and when assuming that the number of microphones 11 is M, the calculation order of MUSIC is $O(M^3)$. Therefore, it is difficult to achieve high-speed processing in real time with MUSIC. Further, if MUSIC is used to identify the direction of the sound source, MUSIC may identify a direction different from the correct direction as the sound source direction, even if there is a single sound source, due to influence of reflection, reverberation, aliasing, and the like. Therefore, MUSIC is insufficient in terms of accuracy.

In order to solve such a problem, the sound source localization apparatus 2 according to the present embodiment uses Projection Approximation Subspace Tracking (PAST) to calculate the signal subspace without performing the eigenvalue decomposition, thereby greatly reducing the amount of calculation. In this method, the signal subspace is sequentially updated for each frame to which the Fourier transformation is applied by using Recursive Least Square (RLS). Therefore, the sound source localization apparatus 2 can calculate the signal subspace at high speed even if the speaker changes to another or moves.

Further, the sound source localization apparatus 2 solves a minimization problem with the MUSIC spectrum denominator term as an objective function to reduce the calculation amount from $O(M^3)$ to $O(M)$. Specifically, the sound source localization apparatus 2 uses Nesterov-accelerated adaptive moment estimation (Nadam), which is one of stochastic gradient descents. Nadam is a method in which Nesterov's Accelerated Gradient Method is incorporated into Adam, and improves a convergence speed to a solution by using gradient information after one iteration. The sound source localization system 2 uses a direction searched by the Delay-Sum Array (DSA) method as an initial solution in order to reduce the number of Nadam iterations.

Specifically, the sound source localization apparatus 2 obtains a plurality of initial solution candidates obtained by the Delay-Sum Array method, and calculates an inner product of each of the plurality of initial solution candidates and the signal subspace obtained by PAST. The sound source localization system 2 uses the initial solution candidate with the largest inner product among the plurality of initial solution candidates as the initial solution of Nadam, thereby enabling the search for a solution in the range around the true direction of the sound source. The sound source localization apparatus 2 calculates the candidates of a direction serving as the initial solution using the Delay-Sum Array method in this way, thereby reducing the number of iterations of processing in Nadam, and converging the minimization problem in a short time to identify the direction of the sound source.

[Sound source localization method]

(Design model)

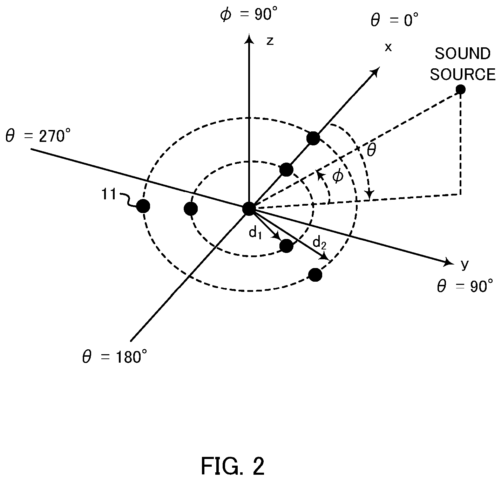

FIG 2 shows a design model of the microphone array 1. In FIG 2, it is assumed that a signal from a fixed sound source s(n) in a $(\theta L, \varphi L)$ direction is received by a Y-shaped microphone array. As shown in FIG 2, each microphone 11 is disposed at a distance of d1 or d2 from the center point. The angles between three directions in which the microphones 11 are arranged are 120 degrees. Here, when the distance between the sound source and the microphone array 1 is sufficiently large, the sound signal can be regarded as a plane wave near the microphone array 1. In this case, a received sound signal X(t,k) can be expressed by the following equations as a sound signal vector in the frequency domain.
[Equation 1]

$$X(t,k) = S(t,k)\boldsymbol{a}_k(\theta_L, \phi_L) + \Gamma(t,k) \tag{1}$$

[Equation 2]

$$\boldsymbol{a}_k(\theta_L, \phi_L) = \left[e^{-j\omega_k\tau_0}, e^{-j\omega_k\tau_1}, \cdots, e^{-j\omega_k\tau_{M-1}}\right]^T \tag{2}$$

[Equation 3]

$$\Gamma(t,k) = \left[\Gamma_0(t,k), \Gamma_1(t,k), \cdots, \Gamma_{M-1}(t,k)\right]^T \tag{3}$$

In the above equations, t represents a frame number in the Fourier transformation, k represents a frequency bin number, $\tau_m$ represents an arrival time difference at a microphone m relative to a reference microphone (for example, microphone 11-0), S(t,k) represents a frequency display of a sound source signal, $\Gamma$(t,k) represents a frequency display of observed noise, and T represents transpose. The sound source localization is a process of obtaining an estimated value $z_e=[\theta_e,\varphi_e]^T$ of a sound source direction vector $z=[\theta_L,\varphi_L]^T$ from a received sound signal X(t,k) in a certain frame t.

(Calculation of signal subspace)

The sound source localization method uses MUSIC and PAST to calculate the signal subspace. MUSIC is a method for estimating a direction from which the sound signal comes. MUSIC is performed on the basis of the orthogonality between (a) a signal subspace vector $Q_s(t,k)=a_k(\theta_L,\varphi_L)$ which is established by an eigenvector calculated by the eigenvalue decomposition of a correlation matrix $R(t,k)=E[X(t,k)X^H(t,k)]$ and (b) a noise subspace vector $Q_N(t,k)$. E[•] represents an expected value calculation, and H represents the Hermitian transpose. MUSIC uses a MUSIC spectrum $P_k(\theta,\varphi)$ expressed by Equation (4) as an objective function.
[Equation 4]

$$P_k(\theta, \phi) = \frac{\boldsymbol{a}_k^H(\theta, \phi)\boldsymbol{a}_k(\theta, \phi)}{\boldsymbol{a}_k^H(\theta, \phi)\boldsymbol{Q}_N(t,k)\boldsymbol{Q}_N^H(t,k)\boldsymbol{a}_k(\theta, \phi)} \tag{4}$$

$a_k(\theta_L,\varphi_L)$ is a virtual steering vector when it is assumed that the target sound source is in a $(\theta,\varphi)$ direction. When $a_k(\theta,\varphi)=a_k(\theta_L,\varphi_L)$ by the orthogonality of the signal subspace and the noise subspace, the denominator of Equation (4) is 0, and $P_k(\theta,\varphi)$ indicates the maximum value (peak).

The maximum value of Equation (4) needs to be calculated for each frame. Performing the eigenvalue decomposition for each frame increases the calculation load. Therefore, the sound source localization apparatus 2 uses PAST to sequentially update $Q_s(t,k)$ for each frame without performing the eigenvalue decomposition. That is, the sound source localization apparatus 2 calculates $Q_s(t,k)$ while reducing the calculation load, and calculates $Q_N(t,k)$ with which the denominator of Equation (4) is minimized. PAST is a process of obtaining $Q_s(t,k)$ with which $J(Q_s(t,k))$ in Equation (5) is minimized.
[Equation 5]

$$J\big(\boldsymbol{Q}_S(t,k)\big) = \sum_{l=1}^{t} \beta^{t-l}\|X(l,k) - \boldsymbol{Q}_S(t,k)\boldsymbol{Q}_{PS}^H(l-1,k)X(l,k)\|^2 \tag{5}$$

Equation (5) is an orthogonality objective function whose value becomes small when the orthogonality between the signal subspace vector and the noise subspace vector is large. In Equation (5), $\beta$ is a forgetting coefficient, and $Q_{PS}^H(l-1,k)$ is an estimation result $Q_s$ of the signal subspace vector in a previous frame. X(l,k) is the sound signal vector, and $Q_s(t,k)Q_{PS}^H(l-1,k)X(l,k)$ is a vector obtained by projecting the sound signal vector onto the signal subspace. The sound source localization apparatus 2 calculates $Q_N(t,k)Q_N^H(t,k)=I-Q_s(t,k)Q_s^H(t,k)$ using $Q_s(t,k)$ estimated on the basis of Equation (5). Further, the sound source localization apparatus 2 calculates the MUSIC spectrum $P_k(\theta,\varphi)$ by applying the

calculated value to Equation (4). Here, I represents a unit matrix.

By having the sound source localization apparatus 2 calculate $Q_N(t,k)Q_N{}^H(t,k)$ using PAST, the calculation order required for calculating the MUSIC spectrum decreases from the conventional $O(M^3)$ to $O(2M)$. Accordingly, the sound source localization apparatus can significantly shorten the processing time for identifying the signal subspace vector.

After identifying the noise subspace vector, the sound source localization apparatus 2 uses Nadam, which is one of stochastic gradient descents. The following equation is used for the optimization objective function of Nadam. $J_k(\theta,\varphi)$ in the following equation is the denominator of Equation (4), and a solution that minimizes the denominator corresponds to the direction vector $z_e$.

[Equation 6]

$$J_k(\theta, \phi) = a_k^H(\theta, \phi) Q_N(t, k) Q_N^H(t, k) a_k(\theta, \phi) \tag{6}$$

[Equation 7]

$$\min_{\hat{z}} J_k(\theta, \phi), \text{sub. to } \theta \in [0, 2\pi], \phi \in \left[0, \frac{\pi}{2}\right] \tag{7}$$

The sound source localization apparatus 2 uses the Delay-Sum Array method to estimate the initial solution candidate when searching for the solution that minimizes $J_k(\theta,\varphi)$, thereby reducing the number of search iterations. A spatial spectrum $Q_k(\theta,\varphi)$ obtained by the Delay-Sum Array method is expressed by Equation (8).

[Equation 8]

$$Q_k(\theta, \phi) = b_k^H(\theta, \phi) R_{DS}(t, k) b_k(\theta, \phi) \tag{8}$$

$R_{DS}(t,k)=E[X_{DS}(t,k)X_{DS}{}^H(t,k)]$ is the correlation matrix used in the Delay-Sum Array method, and $b_k(\theta,\varphi)$ is a steering vector. The sound source localization apparatus 2 identifies, as the initial solution candidate, a direction in which a value obtained by integrating $Q_k(\theta,\varphi)$ as shown in Equation (9) below is equal to or greater than a predetermined value.

[Equation 9]

$$\bar{Q}(\theta, \phi) = \sum_{k=0}^{K-1} Q_k(\theta, \phi) \tag{9}$$

High accuracy is not required for the initial solution candidate. Therefore, in order to reduce the load for calculating the initial solution candidate, the sound source localization apparatus 2 may thin out frequency bins k and directions $(\theta,\varphi)$ to set the roughness of the frequency bin k and the direction $(\theta,\varphi)$ to such a degree that the calculation of the initial solution candidate is finished within one frame.

However, depending on the calculation result of Equation (9), a peak may appear at a position away from a true peak direction $(\theta_L,\varphi_L)$ This occurs when the spatial spectrum $Q_k(\theta,\varphi)$ is affected by aliasing, reflection, reverberation, or the like. Therefore, the sound source localization apparatus 2 obtains R pieces of peaks as the initial solution candidates during the peak search based on Equation (9), and calculate the reliability using Equation (10).

[Equation 10]

$$\psi_k(\theta_r, \phi_r) = \|b_k^H(\theta_r, \phi_r) Q_S(t, k)\|^2, r \in [1, \cdots, R] \tag{10}$$

Equation (10) is a sum of squares of an inner product of the initial solution candidate and the signal subspace vector obtained using PAST. The result obtained from Equation (10) indicates that the direction $(\theta_r,\varphi_r)$ that takes a larger value is close to the signal subspace vector established by $Q_s(t,k)$. The sound source localization apparatus 2 identifies the peak with the highest reliability as the initial solution z', as shown in Equation (11).

[Equation 11]

$$\max_z \sum_k \psi_k(\theta_r, \phi_r), \quad \forall r \tag{11}$$

After determining the initial solution is z', the sound source localization apparatus 2 calculates, assuming that

$z_e$=z', $(\theta_k, \varphi_k)$ corresponding to each frequency bin with the Nadam method that uses Equation (6). The sound source localization apparatus 2 estimates a value obtained by averaging $(\theta_k, \varphi_k)$ corresponding to each of these frequency bins as a new sound source direction vector $z_e$. By obtaining the initial solution z' by using the method described above before searching for a solution by using Nadam, the sound source localization apparatus 2 can search for a solution close to the signal subspace established by the sound source signal in a short time.

[Configuration of sound source localization apparatus 2]

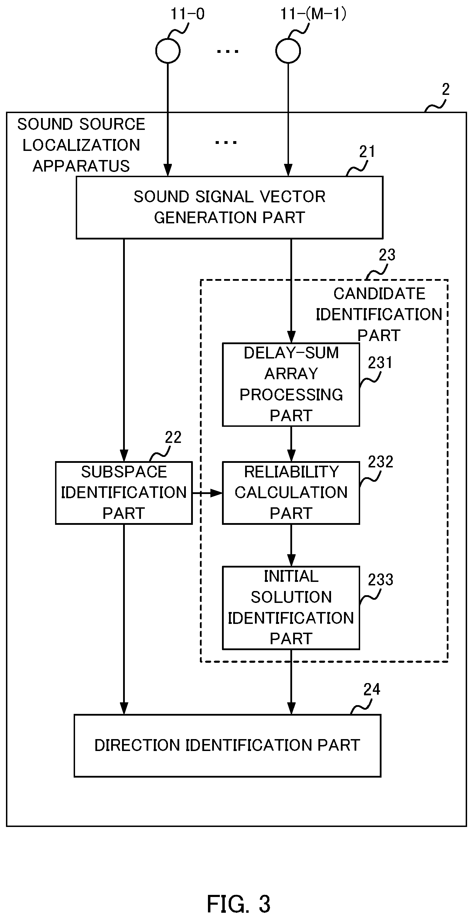

FIG 3 shows a configuration of the sound source localization apparatus 2. The operation of each unit for the sound source localization apparatus 2 to perform the sound source localization method will be described with reference to FIG 3 below. The sound source localization apparatus 2 includes a sound signal vector generation part 21, a subspace identification part 22, a candidate identification part 23, and a direction identification part 24. The candidate identification part 23 includes a Delay-Sum Array processing part 231, a reliability calculation part 232, and an initial solution identification part 233. The sound source localization apparatus 2 functions as the sound signal vector generation part 21, the subspace identification part 22, the candidate identification part 23, and the direction identification part 24 by executing a program stored in a memory by a processor.

The sound signal vector generation part 21 generates a sound signal vector. The sound signal vector is generated on the basis of a plurality of electrical signals outputted by the plurality of microphones 11 that received the voice emitted by the sound source. Specifically, the sound signal vector generation part 21 generates the sound signal vector in the frequency domain by performing the Fourier transformation (for example, fast Fourier transformation) on the plurality of electrical signals inputted from the plurality of microphones 11. The sound signal vector generation part 21 inputs the generated sound signal vector to the subspace identification part 22 and the candidate identification part 23.

The subspace identification part 22 identifies (a) the signal subspace corresponding to the signal component included in the sound signal vector and (b) the noise subspace corresponding to the noise component included in the sound signal vector. The subspace identification part 22 identifies the signal subspace vector and the noise subspace vector by using PAST, for example. The signal subspace vector and the noise subspace vector are identified on the basis of the orthogonality objective function shown in Equation (5) that is based on the difference between the sound signal vector and a vector obtained by projecting said sound signal vector onto the signal subspace.

The candidate identification part 23 identifies one or more candidate vectors by applying the Delay-Sum Array method to the sound signal vector. The one or more candidate vectors correspond to one or more directions assumed as the direction of the sound source (that is, direction from which the sound signal come). Then, the candidate identification part 23 identifies a candidate vector, among the one or more identified candidate vectors, for which a sum of squares of the inner product with the signal subspace vector satisfies a predetermined reliability condition. The reliability condition is that the sum of squares of the inner product of the candidate vector and the signal subspace vector is equal to or greater than a threshold value, for example. The reliability condition is that the likelihood of a sum of squares of an inner product of (a) a probability distribution of the sound signal arriving from a predicted direction and (b) a direction indicated by the candidate vector is relatively large. The identified candidate vector is used as an initial solution when the direction identification part 24 executes a process of searching for the direction of the sound source. The candidate identification part 23 may perform an operation of identifying the one or more candidate vectors in parallel with the process performed by the subspace identification part 22, or may perform the operation of identifying the one or more candidate vectors after the subspace identification part 22 performs the process of identifying the signal subspace vector and the noise subspace vector.

In order to reduce the load for calculating the initial solution candidate, the candidate identification part 23 may determine the frequency bin k and the direction $(\theta, \varphi)$ such that a calculation of the one or more candidate vectors as the initial solution candidate can be finished within one frame of the Fourier transformation that is applied to the sound signal. The candidate identification part 23 thins out the plurality of frequency bins generated by the Fourier transformation on the sound signal to determine the frequency bin k and the direction $(\theta, \varphi)$, for example.

The Delay-Sum Array processing part 231 uses a known Delay-Sum Array method to estimate the plurality of candidate vectors indicating a plurality of possible directions from which the sound signal come, on the basis of a difference in time at which the sound signal emitted from the sound source arrives at each microphone 11. Subsequently, the reliability calculation part 232 uses Equation (10) to calculate the reliability of each direction corresponding to the plurality of candidate vectors estimated by the Delay-Sum Array processing part 231. The initial solution identification part 233 inputs the candidate vector having the highest reliability calculated by the reliability calculation part 232 to the direction identification part 24, as the initial solution of the search process performed by the direction identification part 24.

The direction identification part 24 identifies the direction of the sound source on the basis of the optimization objective function expressed by Equation (6) including a sum of squares of an inner product of the signal subspace vector and the noise subspace vector identified by the subspace identification part 22. The direction identification part 24 identifies, as the direction of the sound source, the direction indicated by the sound source direction vector searched by using the initial solution based on at least any of the one or more candidate vectors identified by the subspace identification part 22. Specifically, the direction identification part 24 uses the stochastic gradient descent using the optimization objective function expressed by Equation (6) to identify the sound source direction vector.

The direction identification part 24 identifies the direction of the sound source for each frame of the Fourier transformation. Then, the direction identification part 24 identifies the direction of the sound source on the basis of an average direction vector. The average direction vector is obtained by averaging the plurality of sound source direction vectors corresponding to the plurality of frequency bins generated by the Fourier transformation.

[Flowchart of process of sound source localization apparatus 2]

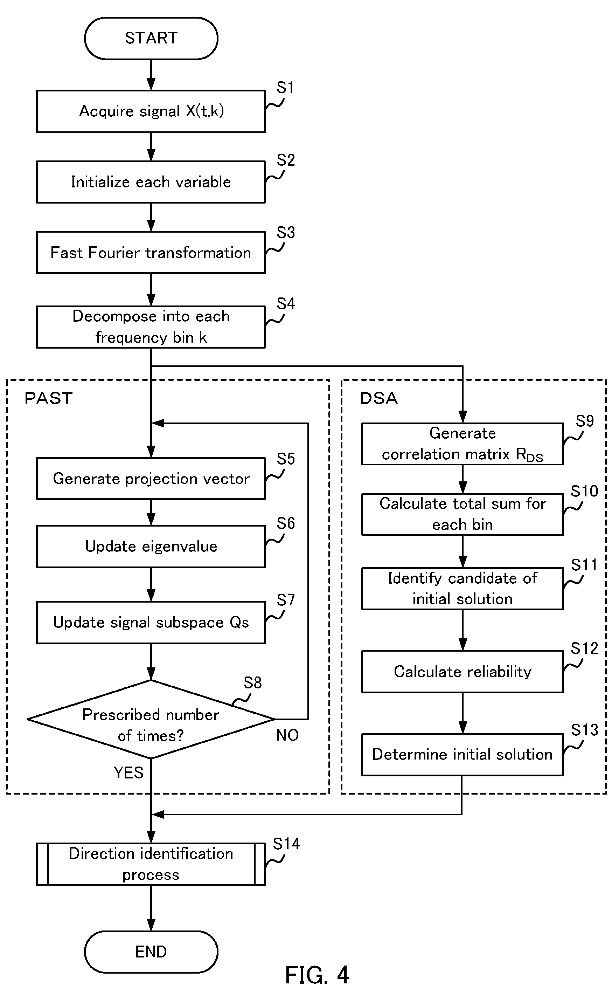

FIG 4 is a flowchart of a process of the sound source localization apparatus 2 executing the sound source localization method. When the sound signal vector generation part 21 acquires the electrical signal corresponding to the sound signal $X(t,k)$ from the microphone array 1 (step S1), the sound signal vector generation part 21 initializes each variable (step S2). The sound signal vector generation part 21 performs the fast Fourier transformation on the sound signal $X(t,k)$ (step S3) to generate the sound signal vector in a frequency domain formed by the frequency bin k (k is a natural number) (step S4).

Subsequently, the subspace identification part 22 projects the sound signal vector onto the signal subspace to generate the projection vector (step S5). The subspace identification part 22 updates the eigenvalue on the basis of Equation (5) (step S6), and updates the signal subspace vector $Q_s(t,k)$ (step S7). The subspace identification part 22 determines whether or not the process from step S5 to S7 has been executed for a prescribed number of times (step S8). When the subspace identification part 22 determines that the process has been executed for the prescribed number of times, the subspace identification part 22 inputs the latest signal subspace vector to the direction identification part 24.

In parallel with the process from step S5 to S8, the candidate identification part 23 generates the correlation matrix $R(t,k)=E[X(t,k)X^H(t,k)]$ (step S9), and uses Equation (9) to calculate a sum total for each frequency bin (step S10). The candidate identification part 23 identifies the vector indicating a direction whose value obtained by the calculation satisfies a predetermined condition (for example, the direction is equal to or greater than a threshold value) as a candidate of the initial solution (step S11). Further, the candidate identification part 23 calculates the reliability of the identified initial solution candidate using Equation (10) (step S12), and determines the initial solution candidate with the highest reliability as the initial solution (step S13).

The candidate identification part 23 notifies the direction identification part 24 about the determined initial solution. The direction identification part 24 identifies the direction of the sound source by using the optimization objective function shown in Equation (6) on the basis of the signal subspace vector notified from the subspace identification part 22 and the initial solution notified from the candidate identification part 23 (step S14).

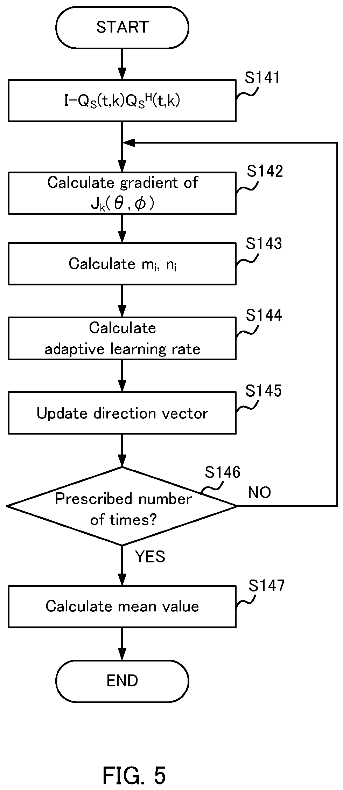

FIG 5 is a flowchart of the process (step S14) of the direction identification part 24 that identifies the direction of the sound source. First, the direction identification part 24 calculates $Q_N(t,k)Q_N^H(t,k)=I-Q_S(t,k)Q_S^H(t,k)$ (step S141), and calculates, on the basis of the calculated result, the gradient of $J_k(\theta,\varphi)$ shown in Equation (6) (step S142). Subsequently, the direction identification part 24 calculates a primary moment $m_i$ and a secondary moment $n_i$ to be used for the process of Nadam (step S143), and calculates an adaptive learning rate by Nesterov's Accelerated Gradient Method (step S144). The direction identification part 24 updates the solution of the direction vector on the basis of the calculated adaptive learning rate (step S145).

The direction identification part 24 repeats the process from step S142 to S145 until said process has been executed for a prescribed number of times, and calculates the mean value of the solutions of the direction vectors obtained for all the frequency bins, thereby identifying the direction of the sound source (step S147).

[Results of real environment experiments]

In order to show the effectiveness of the sound source localization method according to the present embodiment, a real environment experiment was performed. The meeting room 1 and the meeting room 2 at the head office of Audio-Technica Corporation were used as a sound signal recording environment. The size of the meeting room 1 was 5.3[m]*4.7[m]*2.6[m], and the reverberation time was 0.17 seconds. The size of the meeting room 2 was 12.9[m]*6.0[m]*4.0[m], and the reverberation time was 0.80 seconds. An exhaust sound of a personal computer and an air conditioning sound existed as an ambient noise.

A male voice was played through a loudspeaker installed in each meeting room as the sound source, while the voice was recorded with the microphone array 1. Table 1 shows true values of the sound source direction and the distance $S_d$ between the microphone array 1 and the speaker.

[Table 1]

|  | Meeting room 1 | Meeting room 2 |
|---|---|---|
| $\theta_L[°]$ | 350 | 297 |
| $\varphi_L[°]$ | 65 | 70 |
| $S_L[m]$ | 2 | 3.7 |

In this experiment, the number of microphones M=7, $d_1$=15 [mm], $d_2$=43[mm], sampling frequency $f_s$=12[kHz], frame length K=128, 50% overlap, frequency band used 2[kHz] to 5[kHz], forgetting factor $\beta$ of PAST=0.96, and R=2. Further, the step size of Nadam was 0.1. A computer having Intel Core (registered trademark) i7-7700HQ CPU (2.80GHz), RAM 16GB was used for measuring the processing time. A value of the deviation between an estimated direction of the sound source and the true value was evaluated using the mean absolute error $\delta=[\delta_\theta,\delta_\varphi]$ shown in Equation (12). $z=[\theta_L,\varphi_L]^T$ is the true value direction of the sound source.

[Equation 12]

$$\boldsymbol{\delta} = \sqrt{\frac{1}{T}\sum_t (\boldsymbol{z} - \hat{\boldsymbol{z}})^2} \qquad (12)$$

The sound source localization method according to the present embodiment (hereinafter, this method is referred to as "the present method."), a comparison method 1, and a comparison method 2 were used as the sound source localization method. The comparison method 1 was the same as the present method except that the reliability was not checked by Equation (10). The comparison method 2 was a method of peak-searching the MUSIC spectrum by the eigenvalue decomposition. It should be noted that, when calculating the evaluation value of Equation (12), the evaluation value was calculated except for a silent section.

Table 2 shows the mean absolute error $\delta$ of the result measured using each method. From Table 2, it can be confirmed that the error with respect to the true value was less than 5[°] when the present method and the comparison method 2 were used. On the other hand, the error of the comparison method 1 that did not perform the reliability confirmation was larger than that of the present method. The comparison method 2 tended to have a slightly smaller error than the present method because it directly peak-searched the MUSIC spectrum.

[Table 2]

|  | Meeting room 1 | | Meeting room 2 | |
|---|---|---|---|---|
|  | $\delta_\theta[°]$ | $\delta_\varphi[°]$ | $\delta_\theta[°]$ | $\delta_\varphi[°]$ |
| Present method | 3.3 | 0.8 | 4.2 | 4.5 |
| Comparison method 1 | 4.1 | 0.8 | 5.7 | 5.4 |
| Comparison method 2 | 3.0 | 2.8 | 3.7 | 2.6 |

Further, the average calculation time per second, RTF $=S_c/S_1$, of the signal length for each method was compared. Here, $S_c$ was the calculation time (second), and $S_1$ was the signal length (second). If the average calculation time was less than 1 (second), the sound source localization in real time was possible.

Table 3 shows the average calculation time of each method. In the present method and the comparison method 1, the average calculation time was much less than 1 (second), indicating that real-time performance could be ensured. On the other hand, in the comparison method 2, the average calculation time was much higher than 1 (second), indicating that the real-time performance could not be ensured.

[Table 3]

|  | Average calculation time [sec] |
|---|---|
| Present method | 0.21 |
| Comparison method 1 | 0.20 |
| Comparison method 2 | 5.20 |

From the above-described experiment results, it was found that the sound source localization method according to the present embodiment could localize the sound source in real time while ensuring sufficient accuracy.

[Effects of sound source localization apparatus 2 according to present embodiment]

As described above, the sound source localization apparatus 2 according to the present embodiment calculates the signal subspace at high speed, without performing the eigenvalue decomposition, by using PAST for calculating the eigenvectors used for MUSIC. The sound source localization apparatus 2 identifies the initial solution candidates by using the Delay-Sum Array method before calculating the optimal solutions using Nadam with the denominator of the MUSIC spectrum as an objective function. The sound source localization apparatus 2 determines the initial solution on the basis of the reliability of the initial solution candidate identified by the Delay-Sum Array method, thereby shortening the search time of the optimal solution. From the real environment experiment, it was confirmed that the sound source localization method performed by the sound source localization apparatus 2 could ensure the real-time performance and suppress the localization error to less than 5°.

It should be noted that, in the above description, the operation was confirmed using a fixed sound source. But the sound source localization method according to the present embodiment can be applied even if the sound source moves. The sound source localization method according to the present embodiment can search for the optimal solution at high speed. Therefore, the sound source localization method according to the present embodiment enables high-speed and high-accuracy tracking of the sound source. Further, in the above description, Nadam is illustrated as a means of searching for the optimal solution, but Nadam is not the only means of searching for the optimal solution, and other means of solving the minimization problem may be used.

The present invention is explained on the basis of the exemplary embodiments. The technical scope of the present invention is not limited to the scope explained in the above embodiments and it is possible to make various changes and modifications within the scope of the invention. For example, all or part of the apparatus can be configured with any unit which is functionally or physically dispersed or integrated. The scope of the invention is solely defined by the set of appended claims.

[Description of Symbols]

1 microphone array
2 sound source localization apparatus
3 beamformer
11 microphone
21 sound signal vector generation part
22 subspace identification part
23 candidate identification part
231 Delay-Sum Array processing part
232 reliability calculation part
233 initial solution identification part
24 direction identification part

**Claims**

1. A sound source localization apparatus (2) comprising:

a sound signal vector generation part (21) that is configured to generate a sound signal vector by performing Fourier transform on a plurality of electrical signals outputted from a plurality of microphones (11) that receive a sound generated by a sound source;
a subspace identification part (22) that is configured to identify a signal subspace corresponding to a signal component included in the sound signal vector and a noise subspace corresponding to a noise component included in the sound signal vector;
a candidate identification part (23) that is configured to identify one or more candidate vectors indicating one or more candidates of a direction of the sound source by applying a Delay-Sum Array method to the sound signal vector; and
a direction identification part (24) that is configured to identify, as the direction of the sound source, a direction indicated by a sound source direction vector searched using an initial solution based on at least one of the one or more candidate vectors, on the basis of an optimization objective function including a sum of squares of an inner product of the signal subspace and the noise subspace,
**characterized in that**
the candidate identification part (23) is configured to identify the initial solution for which a sum of squares of an inner product of the signal subspace vector corresponding to the signal subspace satisfies a predetermined reliability condition, with the one or more candidate vectors identified by applying the Delay-Sum Array method to the sound signal vector.

2. The sound source localization apparatus (2) according to claim 1, wherein
the candidate identification part (23) is configured to perform a process of identifying the one or more candidate vectors while the subspace identification part (22) is configured to perform a process of identifying the signal subspace and the noise subspace.

3. The sound source localization apparatus (2) according to claim 1 or 2, wherein

the sound signal vector generation part (21) is configured to generate the sound signal vector by performing the Fourier transform on the plurality of electrical signals, and
the direction identification part (24) is configured to identify the direction of the sound source for each frame of the Fourier transform.

4. The sound source localization apparatus (2) according to claim 3, wherein
the direction identification part (24) is configured to identify the direction of the sound source on the basis of an average direction vector obtained by averaging a plurality of the sound source direction vectors corresponding to a plurality of frequency bins generated by the Fourier transform.

5. The sound source localization apparatus (2) according to claim 4, wherein
the candidate identification part (23) is configured to identify the one or more candidate vectors by thinning out the frequency bins such that calculation of the one or more candidate vectors executed by the candidate identification part (23) can be finished within one frame of the Fourier transform that is applied to the plurality of electrical signals.

6. The sound source localization apparatus (2) according to any one of claims 3 to 5, wherein

the direction identification part (24) is configured to identify the sound source direction vector by using a stochastic gradient descent using the optimization objective function expressed by equation:

$$J_k(\theta, \phi) = a_k^H(\theta, \phi) Q_N(t, k) Q_N^H(t, k) a_k(\theta, \phi)$$

where $(\theta, \varphi)$ is a direction, $a_k(\theta_L, \varphi_L)$ is a virtual steering vector when it is assumed that there is a target sound source in $\theta$ and $\varphi$ directions, t is a frame number, k is a frequency bin number, and $Q_N(t, k)$ is a noise subspace vector.

7. The sound source localization apparatus (2) according to any one of claims 3 to 6, wherein
the subspace identification part (22) is configured to identify the signal subspace on the basis of an orthogonality objective function based on a difference between the sound signal vector and a vector obtained by projecting the sound signal vector onto the signal subspace.

8. The sound source localization apparatus (2) according to claim 7, wherein

the subspace identification part (22) is configured to identify the signal subspace on the basis of the orthogonality objective function expressed by equation:

$$J(Q_S(t, k)) = \sum_{l=1}^{t} \beta^{t-l} \|X(l, k) - Q_S(t, k) Q_{PS}^H(l-1, k) X(l, k)\|^2$$

where $\beta$ is a forgetting function, t is a frame number, k is a frequency bin number, $Q_S(t,k)$ is a signal subspace vector, $Q_{PS}{}^H(l-1,k)$ is an estimation result of the signal subspace vector in a previous frame, and X is a sound signal.

9. A sound source localization method comprising the steps, executed by a computer, of:

generating a sound signal vector by performing Fourier transform a plurality of electrical signals outputted by a plurality of microphones (11) that receive a sound generated by a sound source;
identifying a signal subspace corresponding to a signal component included in the sound signal vector and a noise subspace corresponding to a noise component included in the sound signal vector;
identifying one or more candidate vectors indicating one or more candidates of a direction of the sound source by applying a Delay-Sum Array method to the sound signal vector;
identifying, as the direction of the sound source, a direction indicated by a sound source direction vector searched using an initial solution based on at least one of the one or more candidate vectors on the basis of an optimization objective function including a sum of squares of an inner product of the signal subspace and the noise subspace;
**characterized in**
identifying the initial solution for which a sum of squares of an inner product of the signal subspace vector corresponding to the signal subspace satisfies a predetermined reliability condition, with the one or more candidate vectors identified by applying the Delay-Sum Array method to the sound signal vector.

10. A program for causing a computer to execute the steps of:

generating a sound signal vector by performing Fourier transform a plurality of electrical signals outputted by a plurality of microphones (11) that receive a sound generated by a sound source;
identifying a signal subspace corresponding to a signal component included in the sound signal vector and a noise subspace corresponding to a noise component included in the sound signal vector;
identifying one or more candidate vectors indicating one or more candidates of a direction of the sound source by applying a Delay-Sum Array method to the sound signal vector;
identifying, as the direction of the sound source, a direction indicated by a sound source direction vector searched using an initial solution based on at least one of the one or more candidate vectors on the basis of an optimization objective function including a sum of squares of an inner product of the signal subspace and the noise subspace;
**characterized in**
identifying the initial solution for which a sum of squares of an inner product of the signal subspace vector corresponding to the signal subspace satisfies a predetermined reliability condition, with the one or more candidate vectors identified by applying the Delay-Sum Array method to the sound signal vector.

**Patentansprüche**

1. Einrichtung (2) zur Ortung von Schallquellen, umfassend:

einen Schallsignalvektorerzeugungsteil (21), der dazu ausgebildet ist, einen Schallsignalvektor durch Durchführen einer Fourier-Transformation an einer Vielzahl von elektrischen Signalen zu erzeugen, die von einer Vielzahl von Mikrofonen (11) ausgegeben werden, die einen durch eine Schallquelle erzeugten Schall empfangen;
einen Unterraumidentifizierungsteil (22), der dazu ausgebildet ist, einen Signalunterraum, der einer in dem Schallsignalvektor eingeschlossenen Signalkomponente entspricht, und einen Rauschunterraum, der einer in dem Schallsignalvektor eingeschlossenen Rauschkomponente entspricht, zu identifizieren;
einen Kandidatenidentifizierungsteil (23), der dazu ausgebildet ist, einen oder mehrere Kandidatenvektoren, die einen oder mehrere Kandidaten einer Richtung der Schallquelle angeben, durch Anwenden eines Delay-Sum-ArrayVerfahrens auf den Schallsignalvektor zu identifizieren; und
einen Richtungsidentifizierungsteil (24), der dazu ausgebildet ist, eine Richtung, die durch einen Schallquellenrichtungsvektor angegeben wird, der unter Verwendung einer Anfangslösung gesucht wird, die auf mindestens einem des einen oder der mehreren Kandidatenvektoren basiert, basierend auf einer Optimierungszielfunktion, die eine Quadratsumme eines Skalprodukts des Signalunterraums und des Rauschunterraums einschließt, als die Richtung der Schallquelle zu identifizieren,
**dadurch gekennzeichnet, dass**
der Kandidatenidentifizierungsteil (23) dazu ausgebildet ist, die Anfangslösung zu identifizieren, für die eine Quadratsumme eines Skalprodukts des dem Signalunterraum entsprechenden Signalunterraumvektors eine vorbestimmte Zuverlässigkeitsbedingung erfüllt, wobei der eine oder die mehreren Kandidatenvektoren durch Anwenden des Delay-Sum-Array-Verfahrens auf den Schallsignalvektor identifiziert werden.

2. Einrichtung (2) zur Ortung von Schallquellen nach Anspruch 1, wobei
der Kandidatenidentifizierungsteil (23) dazu ausgebildet ist, einen Prozess zum Identifizieren des einen oder der mehreren Kandidatenvektoren durchzuführen, während der Unterraumidentifizierungsteil (22) dazu ausgebildet ist, einen Prozess zum Identifizieren des Signalunterraums und des Rauschunterraums durchzuführen.

3. Einrichtung zur Ortung von Schallquellen (2) nach Anspruch 1 oder 2, wobei

    der Schallsignalvektorerzeugungsteil (21) dazu ausgebildet ist, den Schallsignalvektor durch Durchführen der Fourier-Transformation an der Vielzahl von elektrischen Signalen zu erzeugen, und
    der Richtungsidentifizierungsteil (24) dazu ausgebildet ist, die Richtung der Schallquelle für jeden Frame der Fourier-Transformation zu identifizieren.

4. Einrichtung (2) zur Ortung von Schallquellen nach Anspruch 3, wobei
der Richtungsidentifizierungsteil (24) dazu ausgebildet ist, die Richtung der Schallquelle, basierend auf einem durchschnittlichen Richtungsvektor, zu identifizieren, der durch Mitteln einer Vielzahl der Schallquellenrichtungsvektoren erhalten wird, die einer Vielzahl von durch die Fourier-Transformation erzeugten Frequenzbins entsprechen.

5. Einrichtung (2) zur Ortung von Schallquellen nach Anspruch 4, wobei
der Kandidatenidentifizierungteil (23) dazu ausgebildet ist, den einen oder die mehreren Kandidatenvektoren durch Ausdünnen der Frequenzbins derart, dass eine Berechnung des einen oder der mehreren Kandidatenvektoren, die durch den Kandidatenidentifizierungteil (23) ausgeführt wird, innerhalb eines Frames der Fourier-Transformation abgeschlossen werden kann, die auf die Vielzahl von elektrischen Signalen angewandt wird, zu identifizieren.

6. Einrichtung zur Ortung von Schallquellen (2) nach einem der Ansprüche 3 bis 5, wobei

    der Richtungsidentifizierungteil (24) dazu ausgebildet ist, den Schallquellenrichtungsvektor durch Verwenden eines stochastischen Gradientenabstiegs unter Verwendung der durch die Gleichung:

$$J_k(\theta, \phi) = \boldsymbol{a}_k^H(\theta, \phi) \boldsymbol{Q}_N(t, k) \boldsymbol{Q}_N^H(t, k) \boldsymbol{a}_k(\theta, \phi)$$

    ausgedrückten Optimierungszielfunktion zu identifizieren,
    wobei $(\theta, \varphi)$ eine Richtung ist, $a_k(\theta_L, \varphi_L)$ ein virtueller Steuerungsvektor ist, wenn angenommen wird, dass sich eine Zielschallquelle in den Richtungen $\theta$ und $\varphi$ befindet, t eine Frame-Nummer ist, k eine Frequenzbin-Nummer ist und $Q_N(t, k)$ ein Rauschunterraumvektor ist.

7. Einrichtung (2) zur Ortung von Schallquellen nach einem der Ansprüche 3 bis 6, wobei
der Unterraumidentifizierungsteil (22) dazu ausgebildet ist, den Signalunterraum, basierend auf einer Orthogonalitätszielfunktion, zu identifizieren, die auf einer Differenz zwischen dem Schallsignalvektor und einem Vektor basiert, der durch Projizieren des Schallsignalvektors auf den Signalunterraum erhalten wird.

8. Einrichtung (2) zur Ortung von Schallquellen nach Anspruch 7, wobei

    der Unterraumidentifizierungsteil (22) dazu ausgebildet ist, den Signalunterraum, basierend auf der durch die Gleichung:

$$J\big(\boldsymbol{Q}_S(t, k)\big) = \sum_{l=1}^{t} \beta^{t-l} \|\boldsymbol{X}(l, k) - \boldsymbol{Q}_S(t, k)\boldsymbol{Q}_{PS}^H(l-1, k)\boldsymbol{X}(l, k)\|^2$$

    ausgedrückten Orthogonalitätszielfunktion, zu identifizieren,
    wobei $\beta$ eine Vergessensfunktion ist, t eine Frame-Nummer ist, k eine Frequenzbin-Nummer ist, $Q_S(t,k)$ ein Signalunterraumvektor ist, $Q_{PS}^H(l-1,k)$ ein Schätzungsergebnis des Signalunterraumvektors in einem vorherigen Frame ist und X ein Schallsignal ist.

9. Verfahren zur Ortung von Schallquellen, das die durch einen Computer ausgeführten Schritte umfasst von:

Erzeugen eines Schallsignalvektors durch Durchführen einer Fourier-Transformation einer Vielzahl von elektrischen Signalen, die durch eine Vielzahl von Mikrofonen (11) ausgegeben werden, die einen durch eine Schallquelle erzeugten Schall empfangen;

Identifizieren eines Signalunterraums, der einer in dem Schallsignalvektor eingeschlossenen Signalkomponente entspricht, und eines Rauschunterraums, der einer in dem Schallsignalvektor eingeschlossenen Rauschkomponente entspricht;

Identifizieren eines oder mehrerer Kandidatenvektoren, die einen oder mehrere Kandidaten einer Richtung der Schallquelle angeben, durch Anwenden eines Delay-Sum-Array-Verfahrens auf den Schallsignalvektor;

Identifizieren einer Richtung, die durch einen Schallquellenrichtungsvektor angegeben wird, der unter Verwendung einer Anfangslösung gesucht wird, die auf mindestens einem des einen oder der mehreren Kandidatenvektoren basiert, basierend auf einer Optimierungszielfunktion, die eine Quadratsumme eines Skalarprodukts des Signalunterraums und des Rauschunterraums umfasst, als die Richtung der Schallquelle; **gekennzeichnet durch**

Identifizieren der Anfangslösung, für die eine Quadratsumme eines Skalarprodukts des dem Signalunterraum entsprechenden Signalunterraumvektors eine vorbestimmte Zuverlässigkeitsbedingung erfüllt, wobei der eine oder die mehreren Kandidatenvektoren durch Anwenden des Delay-Sum-Array-Verfahrens auf den Schallsignalvektor identifiziert werden.

10. Programm, das einen Computer veranlasst, die Schritte auszuführen von:

Erzeugen eines Schallsignalvektors durch Durchführen einer Fourier-Transformation einer Vielzahl von elektrischen Signalen, die durch eine Vielzahl von Mikrofonen (11) ausgegeben werden, die einen durch eine Schallquelle erzeugten Schall empfangen;

Identifizieren eines Signalunterraums, der einer in dem Schallsignalvektor eingeschlossenen Signalkomponente entspricht, und eines Rauschunterraums, der einer in dem Schallsignalvektor eingeschlossenen Rauschkomponente entspricht;

Identifizieren eines oder mehrerer Kandidatenvektoren, die einen oder mehrere Kandidaten einer Richtung der Schallquelle angeben, durch Anwenden eines Delay-Sum-Array-Verfahrens auf den Schallsignalvektor;

Identifizieren einer Richtung, die durch einen Schallquellenrichtungsvektor angegeben wird, der unter Verwendung einer Anfangslösung gesucht wird, die auf mindestens einem des einen oder der mehreren Kandidatenvektoren basiert, basierend auf einer Optimierungszielfunktion, die eine Quadratsumme eines Skalarprodukts des Signalunterraums und des Rauschunterraums umfasst, als die Richtung der Schallquelle; **gekennzeichnet durch**

Identifizieren der Anfangslösung, für die eine Quadratsumme eines Skalarprodukts des dem Signalunterraum entsprechenden Signalunterraumvektors eine vorbestimmte Zuverlässigkeitsbedingung erfüllt, wobei der eine oder die mehreren Kandidatenvektoren durch Anwenden des Delay-Sum-Array-Verfahrens auf den Schallsignalvektor identifiziert werden.

**Revendications**

1. Appareil de localisation (2) de source sonore comprenant :

une partie de génération (21) de vecteur de signal sonore qui est configurée pour générer un vecteur de signal sonore en exécutant une transformée de Fourier sur une pluralité de signaux électriques émis depuis une pluralité de microphones (11) qui reçoivent un son généré par une source sonore ;

une partie d'identification de sous-espace (22) qui est configurée pour identifier un sous-espace de signal correspondant à une composante de signal incluse dans le vecteur de signal sonore et un sous-espace de bruit correspondant à une composante de bruit incluse dans le vecteur de signal sonore ;

une partie d'identification de candidat(s) (23) qui est configurée pour identifier un ou plusieurs vecteurs candidats indiquant un ou plusieurs candidats d'une direction de la source sonore en appliquant une méthode de réseau à sommation de retards au vecteur de signal sonore ; et

une partie d'identification de direction (24) qui est configurée pour identifier, en tant que la direction de la source sonore, une direction indiquée par un vecteur de direction de source sonore recherché à l'aide d'une solution initiale basée sur au moins un desdits un ou plusieurs vecteurs candidats, sur la base d'une fonction-objectif d'optimisation incluant une somme des carrés d'un produit intérieur du sous-espace de signal et du sous-espace de bruit,

**caractérisé en ce que**

la partie d'identification de candidat(s) (23) est configurée pour identifier la solution initiale pour laquelle une somme des carrés d'un produit intérieur du vecteur de sous-espace de signal correspondant au sous-espace de signal satisfait à une condition de fiabilité préétablie, lesdits un ou plusieurs vecteurs candidats étant identifiés en appliquant la méthode de réseau à sommation de retards au vecteur de signal sonore.

2. Appareil de localisation (2) de source sonore selon la revendication 1, dans lequel
la partie d'identification de candidat(s) (23) est configurée pour effectuer un processus d'identification desdits un ou plusieurs vecteurs candidats, tandis que la partie d'identification de sous-espace (22) est configurée pour effectuer un processus d'identification du sous-espace de signal et du sous-espace de bruit.

3. Appareil de localisation (2) de source sonore selon la revendication 1 ou 2, dans lequel

la partie de génération (21) de vecteur de signal sonore est configurée pour générer le vecteur de signal sonore en exécutant la transformée de Fourier sur la pluralité de signaux électriques, et
la partie d'identification de direction (24) est configurée pour identifier la direction de la source sonore pour chaque trame de la transformée de Fourier.

4. Appareil de localisation (2) de source sonore selon la revendication 3, dans lequel
la partie d'identification de direction (24) est configurée pour identifier la direction de la source sonore sur la base d'un vecteur de direction moyen obtenu en calculant la moyenne d'une pluralité des vecteurs de direction de source sonore correspondant à une pluralité d'intervalles de fréquence générés par la transformée de Fourier.

5. Appareil de localisation (2) de source sonore selon la revendication 4, dans lequel
la partie d'identification de candidat(s) (23) est configurée pour identifier lesdits un ou plusieurs vecteurs candidats en diminuant les intervalles de fréquence de manière que le calcul desdits un ou plusieurs vecteurs candidats exécuté par la partie d'identification de candidat(s) (23) puisse être terminé dans les limites d'une trame de la transformée de Fourier qui est appliquée à la pluralité de signaux électriques.

6. Appareil de localisation (2) de source sonore selon l'une quelconque des revendications 3 à 5, dans lequel

la partie d'identification de direction (24) est configurée pour identifier le vecteur de direction de source sonore en utilisant une descente de gradient stochastique à l'aide de la fonction-objectif d'optimisation exprimée par l'équation :

$$J_k(\theta, \phi) = a_k^H(\theta, \phi) Q_N(t, k) Q_N^H(t, k) a_k(\theta, \phi)$$

où $(\theta, \varphi)$ est une direction, $a_k(\theta_L, \varphi_L)$ est un vecteur de directivité virtuel lorsqu'on suppose qu'il existe une source sonore cible dans les directions $\theta$ et $\varphi$, t est un numéro de trame, k est un numéro d'intervalle de fréquence, et $Q_N(t, k)$ est un vecteur de sous-espace de bruit.

7. Appareil de localisation (2) de source sonore selon l'une quelconque des revendications 3 à 6, dans lequel
la partie d'identification de sous-espace (22) est configurée pour identifier le sous-espace de signal sur la base d'une fonction-objectif d'orthogonalité basée sur une différence entre le vecteur de signal sonore et un vecteur obtenu en projetant le vecteur de signal sonore sur le sous-espace de signal.

8. Appareil de localisation (2) de source sonore selon la revendication 7, dans lequel

la partie d'identification de sous-espace (22) est configurée pour identifier le sous-espace de signal sur la base de la fonction-objectif d'orthogonalité exprimée par l'équation :

$$J\big(\boldsymbol{Q}_S(t,k)\big) = \sum_{l=1}^{t} \beta^{t-l} \|\boldsymbol{X}(l,k) - \boldsymbol{Q}_S(t,k)\boldsymbol{Q}_{PS}^{H}(l-1,k)\boldsymbol{X}(l,k)\|^2$$

où β est une fonction d'oubli, t est un numéro de trame, k est un numéro d'intervalle de fréquence, $Q_S(t,k)$ est un vecteur de sous-espace de signal, $Q_{PS}{}^H$(l-1,k) est un résultat d'estimation du vecteur de sous-espace de signal dans une trame précédente, et X est un signal sonore.

9.  Procédé de localisation de source sonore comprenant les étapes, exécutées par un ordinateur, consistant à :

    générer un vecteur de signal sonore en exécutant une transformée de Fourier sur une pluralité de signaux électriques émis par une pluralité de microphones (11) qui reçoivent un son généré par une source sonore ;
    identifier un sous-espace de signal correspondant à une composante de signal incluse dans le vecteur de signal sonore et un sous-espace de bruit correspondant à une composante de bruit incluse dans le vecteur de signal sonore ;
    identifier un ou plusieurs vecteurs candidats indiquant un ou plusieurs candidats d'une direction de la source sonore en appliquant une méthode de réseau à sommation de retards au vecteur de signal sonore ;
    identifier, en tant que la direction de la source sonore, une direction indiquée par un vecteur de direction de source sonore recherché à l'aide d'une solution initiale basée sur au moins un desdits un ou plusieurs vecteurs candidats, sur la base d'une fonction-objectif d'optimisation incluant une somme des carrés d'un produit intérieur du sous-espace de signal et du sous-espace de bruit ;
    **caractérisé par** l'étape consistant à
    identifier la solution initiale pour laquelle une somme des carrés d'un produit intérieur du vecteur de sous-espace de signal correspondant au sous-espace de signal satisfait à une condition de fiabilité préétablie, lesdits un ou plusieurs vecteurs candidats étant identifiés en appliquant la méthode de réseau à sommation de retards au vecteur de signal sonore.

10. Programme destiné à amener un ordinateur à exécuter les étapes consistant à :

    générer un vecteur de signal sonore en exécutant une transformée de Fourier sur une pluralité de signaux électriques émis par une pluralité de microphones (11) qui reçoivent un son généré par une source sonore ;
    identifier un sous-espace de signal correspondant à une composante de signal incluse dans le vecteur de signal sonore et un sous-espace de bruit correspondant à une composante de bruit incluse dans le vecteur de signal sonore ;
    identifier un ou plusieurs vecteurs candidats indiquant un ou plusieurs candidats d'une direction de la source sonore en appliquant une méthode de réseau à sommation de retards au vecteur de signal sonore ;
    identifier, en tant que la direction de la source sonore, une direction indiquée par un vecteur de direction de source sonore recherché à l'aide d'une solution initiale basée sur au moins un desdits un ou plusieurs vecteurs candidats, sur la base d'une fonction-objectif d'optimisation incluant une somme des carrés d'un produit intérieur du sous-espace de signal et du sous-espace de bruit ;
    **caractérisé par** l'étape consistant à
    identifier la solution initiale pour laquelle une somme des carrés d'un produit intérieur du vecteur de sous-espace de signal correspondant au sous-espace de signal satisfait à une condition de fiabilité préétablie, lesdits un ou plusieurs vecteurs candidats étant identifiés en appliquant la méthode de réseau à sommation de retards au vecteur de signal sonore.

H−1

H−2

Voice

S

1

SOUND SOURCE
LOCALIZATION
APPARATUS

2

11

H−3

3

BEAMFORMER

H−4

FIG. 1

FIG. 2

11-0    11-(M-1)

2

SOUND SOURCE
LOCALIZATION
APPARATUS

. . .

21

SOUND SIGNAL VECTOR
GENERATION PART

23

CANDIDATE
IDENTIFICATION
PART

DELAY-SUM
ARRAY
PROCESSING
PART

231

22

SUBSPACE
IDENTIFICATION
PART

RELIABILITY
CALCULATION
PART

232

INITIAL
SOLUTION
IDENTIFICATION
PART

233

24

DIRECTION IDENTIFICATION PART

FIG. 3

START

Acquire signal X(t,k)  S1

Initialize each variable  S2

Fast Fourier transformation  S3

Decompose into each frequency bin k  S4

**PAST**

Generate projection vector  S5

Update eigenvalue  S6

Update signal subspace Qs  S7

Prescribed number of times?  S8

NO

YES

**DSA**

Generate correlation matrix $R_{DS}$  S9

Calculate total sum for each bin  S10

Identify candidate of initial solution  S11

Calculate reliability  S12

Determine initial solution  S13

Direction identification process  S14

END

FIG. 4

START

S141
$I-Q_S(t,k)Q_S^H(t,k)$

S142
Calculate gradient of
$J_k(\theta, \phi)$

S143
Calculate $m_i$, $n_i$

S144
Calculate
adaptive learning rate

S145
Update direction vector

S146
Prescribed number
of times?

NO

YES

S147
Calculate mean value

END

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6623185 B

**Non-patent literature cited in the description**

- **DAISUKE TSUJI** ; **KENJI SUYAMA**. Moving sound source localization based on sequential subspace estimation in actual room environments. *ELECTRONICS AND COMMUNICATIONS IN JAPAN, SCRIPTA TECHNICA*, 01 July 2011, vol. 94 (7), 17-26